# EUROPÄISCHE PATENTSCHRIFT

(11) **EP 2 792 522 B1**
(45) Veröffentlichungstag und Bekanntmachung des Hinweises auf die Patenterteilung: **27.12.2017**
(21) Anmeldenummer: 13163701.9
(22) Anmeldetag: 15.04.2013
(51) Int. Cl.: B60K 6/12

(54) **Hybrid-Antriebssystem**
Hybrid transmission system
Système d'entraînement hybride

(43) Veröffentlichungstag der Anmeldung: 22.10.2014
(73) Patentinhaber: HAWE Hydraulik SE, 81673 München (DE)
(72) Erfinder: Macit, Recep, 81673 München (DE)
(74) Vertreter: Grosse Schumacher Knauer von Hirschhausen

(56) Entgegenhaltungen:
- EP-A2- 2 251 549
- DE-A1-102007 062 889
- DE-A1-102008 015 729
- DE-U1-202006 019 306
- US-A1- 2010 141 024

## Beschreibung

Die Erfindung betrifft ein Hybrid-Antriebssystem gemäß Oberbegriff des Patentanspruchs 1.

Aus DE 10 2007 062 889 A ist ein gattungsgemäßes Hybrid-Antriebssystem bekannt, bei welchem der mit dem Hybridmodul verbundene oder verbindbare hydraulische Arbeitsmodul mit hydraulischer Energie aus dem Hybridmodul ausschließlich in Strömungsrichtung in den hydraulischen Arbeitsmodul speisbar ist, hingegen im Betrieb von über den hydraulischen Arbeitsmodul betreibbaren Einrichtungen gewonnene hydraulische Energie nicht zurück in den Hybridmodul speisbar ist. Der hydraulische Arbeitsmodul ist zusätzlich über ein Wechselventil an eine Druckquelle anschließbar.

Bei einer aus EP 2 251 549 A2 bekannten hydraulischen Anlage ist ein serieller oder ein paralleler Hybridbetrieb möglich. Die hydraulische Anlage umfasst auch eine Steuer- und Speisehydraulik als hydraulischen Arbeitsmodul und eine Lenkungshydraulik, wobei zwischen dem Hydraulikmodul und der Lenkungshydraulik ein aus einer Verstellpumpe gespeistes Prioritätsventil vorgesehen ist. Die Verstellpumpe kann wahlweise als Druckmittelpumpe oder Hydraulikmotor betrieben werden und speist im Pumpenbetrieb über ein separates Einspeiseventil einen Druckspeicher, der wahlweise auch über das Prioritätsventil beaufschlagbar ist. Im Betrieb vom über den Hydraulikmodul betreibbaren Einrichtungen gewonnene hydraulische Energie kann über das Prioritätsventil nicht in den Hybridmodul eingespeist werden. Eine über den hydraulischen Arbeitsmodul betreibbare Einrichtung kann ein Kühlgebläse sein. Optional können mehrere Druckmittelspeicher Teil des Hybridmoduls sein.

Aus US 7,104,920 B2 ist ein Hybrid-Antriebssystem für ein Arbeitsfahrzeug bekannt, das zumindest einen parallelen hydraulischen Hybridmodul aufweist, um zumindest Bremsenergie des Arbeitsfahrzeuges in hydraulische Energie umzuwandeln, zu speichern, und in bestimmten Fahrsituationen das Fahrzeug hydraulisch anzutreiben. Vom Getriebe zweigt ein mechanischer Leistungsabgriff ab, an den eine Hydraulikpumpe angeschlossen sein kann, die ein Hydrauliksystem des Arbeitsfahrzeuges versorgt. Die Hydraulikpumpe wird somit entweder vom Verbrennungsmotor angetrieben oder im Hybridbetrieb von dem Hybridmodul. Die bedeutet jedoch auch dann einen Leistungsverlust, wenn aus dem Hydrauliksystem des Arbeitsfahrzeuges keine Leistung abgenommen wird.

Aus EP 1 824 699 B1 ist ein Hybrid-Antriebssystem für ein Arbeitsfahrzeug bekannt, das im mechanischen Antriebsstrang vom Verbrennungsmotor zur getriebenen Achse einen parallelen hydraulischen Hybridmodul mit zwei wahlweise als Pumpe oder Motor betreibbaren Hydraulikaggregaten und einen Druckspeicher aufweist.

Ein ähnliches Hybrid-Antriebssystem ist bekannt aus EP 1 817 194 B1.

Aus US 5,495,912 A ist ebenfalls ein Hybrid-Antriebssystem mit einem parallelen hydraulischen Hybridmodul bekannt, der in aktiviertem Zustand auf ein kontinuierlich variables Getriebe zur Antriebsachse einwirkt, während gleichzeitig der Verbrennungsmotor vom Antriebsstrang abkuppelbar ist.

Aus EP 2 039 554 A2 ist ein serieller und paralleler Hybrid-Antrieb mit zwei Primäraggregaten bekannt, wobei das zweite Primäraggregat eine Freikolbenmaschine als Teil des seriellen Hybridantriebs ist. Im "Stop and Go" Einsatz des Arbeitsfahrzeuges mit kurzen Beschleunigungsphasen und anschließenden Verzögerungsphasen, wie bei Müllsammelfahrzeugen üblich, wird das Arbeitsfahrzeug mit dem hydraulischen Seriell-Hybridantrieb hydraulisch von dem Hydraulikaggregat und der Freikolbenmaschine angetrieben, beispielsweise durch das Hydraulikaggregat beschleunigt und über das Hydraulikaggregat verzögert oder gebremst. Durch den Rückgewinn der Bremsenergie beschränkt sich dabei der zusätzliche Energiebedarf für das Hydraulikaggregat auf den Ausgleich der Verluste, die durch beispielsweise Fahrwiderstände und Wandlungsverluste im Antriebsstrang entstehen. Dieser geringe Energiebedarf wird durch die Freikolbenmaschine gedeckt, während die Verbrennungsmotor weggeschaltet ist.

Arbeitsfahrzeuge wie zum Beispiel Kranken- und Behinderten-Transporter, Müllfahrzeuge, Straßenpflegefahrzeuge, Radlader und dergleichen weisen im Regelfall hydraulisch betreibbare, bordeigene oder angebaute Geräte auf, die aus wenigstens einem hydraulischen Arbeitsmodul gespeist werden, der über eine vom Verbrennungsmotor oder elektrisch angetriebene Pumpe versorgt wird und im Falle eines Hybrid-Antriebssystems des Arbeitsfahrzeuges vollständig unabhängig von dem Hybridmodul ist. Aufgrund dieser Unabhängigkeit zwischen dem Hybridmodul und dem Arbeitsmodul kann hydraulisch gespeicherte Leistung aus dem Hybridmodul nicht zum Betrieb der hydraulisch betreibbaren Einrichtungen am Arbeitsmodul genutzt werden, und kann auch keine aus dem hydraulischen Betrieb der Einrichtungen hydraulisch gewinnbare Leistung, zum Beispiel aus gebremstem Absenken einer Last, in den Hybridmodul überführt werden. Dies verschlechtert die Effizienz des Hybrid-Antriebssystems und ist konträr zum eigentlichen Zweck des Hybrid-Antriebssystems, nämlich jegliche unnötige Leistungsverluste oder eine Leistungsvergeudung im Betrieb des Arbeitsfahrzeugs so weit wie möglich zu minimieren.

Der Erfindung liegt die Aufgabe zugrunde, ein Hybrid-Antriebssystem der eingangs genannten Art mit einer verbesserten Leistungsbilanz und hohen Effizienz zu schaffen.

Die gestellte Aufgabe wird mit den Merkmalen des Patenanspruchs 1 gelöst.

Da der zumindest wenigstens eine hydraulische Arbeitsmodul mit dem Hybridmodul verbunden oder verbindbar ist, lässt sich nicht nur im Hybridmodul hydraulisch gespeicherte Leistung zum Betreiben an den Arbeitsmodul angeschlossener Einrichtungen des Arbeitsfahrzeuges nutzen, sondern kann aus dem Betrieb der Einrichtungen gewinnbare Energie, zum Beispiel bei gebremstem Absenken einer Last oder Ähnlichem, aus dem hydraulischen Arbeitsmodul in den Hybridmodul überführt und dort gespeichert werden, um später erneut im Arbeitsmodul oder zum Antreiben des Arbeitsfahrzeuges genutzt zu werden. Dies verbessert die Leistungsbilanz des Hybrid-Antriebssystems spürbar, da zumindest Spitzenbelastungen von Einrichtungen oder ein Betriebsstart von Einrichtungen, die an den Arbeitsmodul angeschlossen sind, aus dem Hybridmodul bewerkstelligbar sind, ohne zusätzliche Leistung vom Verbrennungsmotor zu benutzen, und auch von hydraulisch betreibbaren Einrichtungen erzeugte Energie nicht in Wärme umgewandelt oder durch Reibung vernichtet zu werden braucht, sondern in den Hybridmodul überführt werden kann. Besonders zweckmäßig können die hydraulisch betreibbaren Einrichtungen bei Speisung aus dem Hybridmodul benutzt werden, ohne dass der Verbrennungsmotor im Betrieb zu sein braucht. Mit dem Verbrennungsmotor ist eine hydraulische Verstellpumpe gekuppelt, an die der hydraulische Arbeitsmodul und die hydraulische Lenkung angeschlossen sind. Diese Verstellpumpe versorgt bei Bedarf die hydraulische Lenkung und auch über den hydraulischen Arbeitsmodul die hydraulischen Verbraucher unter Betriebsbedingungen, in denen entweder die Leistung des Hybridmoduls für andere Zwecke benötigt wird, oder keine ausreichende Leistungsreserve vorliegt. Da die Verstellpumpe ohne Leistungsabnahme sehr verlustarm antreibbar ist (weitgehend drucklose Stand-by-Betriebssituation der Verstellpumpe), beeinträchtigt sie ansonsten die Leistungsbilanz des Hybrid-Antriebssystems nicht nennenswert. Andererseits ist die jederzeitige Betriebsbereitschaft des hydraulischen Arbeitsmoduls und speziell der hydraulischen Lenkung gesichert.

Hierbei sind zweckmäßig die hydraulische Lenkung und der hydraulische Arbeitsmodul gemeinsam über ein Prioritätsventil mit Priorität für die hydraulische Lenkung an die Verstellpumpe angeschlossen. Von der Lenkung nicht gebrauchte hydraulische Leistung wird über das Prioritätsventil in den Arbeitsmodul eingespeist und gegebenenfalls von diesem an den Hybridmodul weitergegeben. Die Lenkung ist stets betriebsbereit.

Bei einer zweckmäßigen Ausführungsform ist der hydraulische Arbeitsmodul wahlweise mit einer von vom Hydraulikaggregat zu je einem Druckspeicher führenden Speiseleitungen verbunden. Auf diese Weise kann jeweils von dort hydraulische Leistung für den Arbeitsmodul abgezogen werden, wo mehr zur Verfügung steht, oder kann hydraulische Leistung aus dem Arbeitsmodul in den Hybridmodul dort eingespeist werden, wo gerade ohnedies weniger gespeichert ist.

Die Leistungsbilanz des Arbeitsfahrzeuges lässt sich noch weiter verbessern, wenn die hydraulische Lenkung und/oder ein hydraulischer Kühlgebläseantrieb für das Kühlgebläse, beispielsweise des Verbrennungsmotors, mit dem Hybridmodul verbunden oder verbindbar ist bzw. sind. Vorzugsweise kann die Verbindung über den hydraulischen Arbeitsmodul erfolgen. Auf diese Weise kann auch die hydraulische Lenkung Leistung aus dem Hybridmodul verwenden und/oder der Kühlgebläseantrieb, ohne dass diese Leistung durch den Verbrennungsmotor erzeugt werden muss. Der Hybridmodul ist sehr leistungsstark, da er vorwiegend die Bremsenergie des Fahrzeugs aufnimmt und gespeichert vorhält.

Die Verstellpumpe kann auch zum Versorgen eines hydraulischen Lüfterantriebs benutzt werden, und dann zweckmäßig über den Arbeitsmodul und beispielsweise thermostatgesteuert, um tatsächlich nur zu kühlen, wenn die Temperaturverhältnisse des Verbrennungsmotors dies erfordern.

Die Energiebilanz des Hybrid-Antriebssystems lässt sich noch weiter verbessern, wenn der Verbrennungsmotor mit einer Start/Stop-Automatik so betreibbar ist, dass er bei aktiviertem Hybridmodul stillsetzbar ist, das heißt, nicht nur bei Stillstand des Fahrzeugs, sondern auch beim Segeln mit oder ohne Beiziehen des Hybridmoduls und in bestimmten Verzögerungsphasen. Gegebenenfalls enthält der Antriebsstrang sogar einen Freilauf, um die Schlepplasten zu minimieren.

Bei einer zweckmäßigen Ausführungsform ist der hydraulische Arbeitsmodul über ein 2/2-Wege-Magnetventil, vorzugsweise ein Proportional-Magnetventil, an den Hybridmodul anschließbar. Dies soll nicht ausschließen, eine permanente offene Verbindung zwischen dem Arbeitsmodul und dem Hybridmodul vorzusehen. Das Ventil ermöglicht jedoch die in bestimmten Arbeits- oder Fahrsituationen gewünschte hydraulische Abkopplung des hydraulischen Arbeitsmoduls vom Hybridmodul, beziehungsweise umgekehrt. Im Falle eines Proportional-Magnetventils kann der Übergang feinfühlig gesteuert werden, um eine Rampenfunktion zu erzielen oder bzw. einen Druckschlag zu vermeiden.

Zweckmäßig ist die Kupplung, mit der der Hybridmodul mit dem Antriebsstrang kuppelbar ist, eine hydraulisch schaltbare Haldex-Kupplung. Diese spricht sehr feinfühlig an, ist dauerstandfest und höchst betriebssicher.

Zweckmäßig wird die Haldex-Kupplung über ein 3/2-Proportionaldruckregelventil aus einem Steuerdruckkreis betätigt. Dieser Steuerdruckkreis kann, vorzugsweise, aus dem Hybridmodul gespeist sein, oder alternativ aus einer Steuerdruckquelle anderer Art. Die Druckregelfunktion ermöglicht ein rasches Ein- und Ausrücken der Haldex-Kupplung genauso wie eine Rampenfunktion mit gleitendem Übergang, um Bei Ein- oder Auskuppeln das Fahrverhalten des Arbeitsfahrzeuges möglichst wenig zu beeinträchtigen.

Ferner kann es zweckmäßig sein, wenn im Hybridmodul ein gegen Vorsteuerdruck federbelastetes 3/2-Umschaltventil vorgesehen ist, das den Arbeitsmodul mit dem den jeweils höheren Druck enthaltenden Druckspeicher zumindest dann verbindet, wenn der Arbeitsmodul aus dem Hybridmodul hydraulisch versorgt wird.

Zweckmäßig ist für den Hybridmodul, den hydraulischen Arbeitsmodul und die Verstellpumpe ein gemeinsames Hydraulikreservoir vorgesehen.

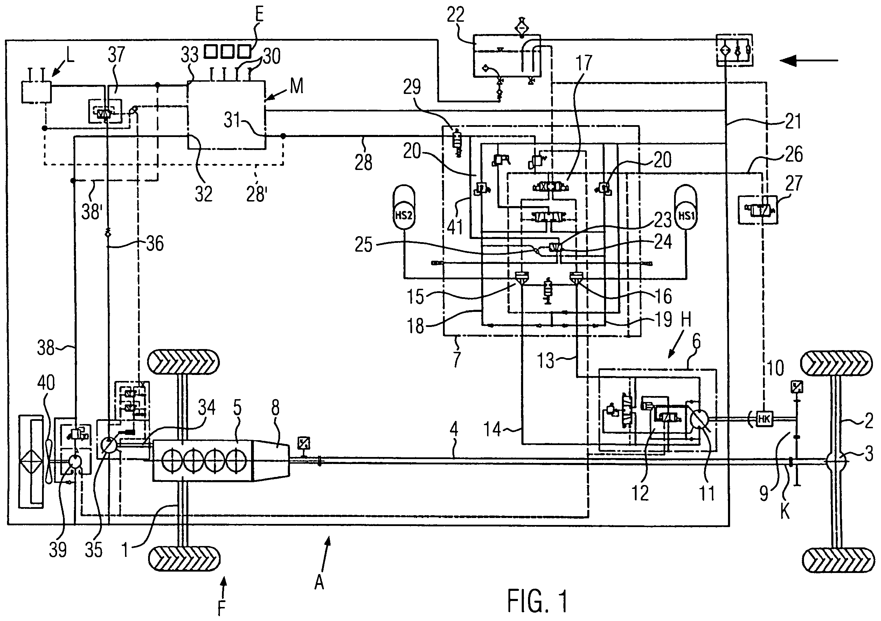

Anhand der Zeichnung werden Ausführungsformen des Anmeldungsgegenstandes erläutert. Die Figur 1 ist ein Blockschaltbild eines Hybrid-Antriebssystems in einem Arbeitsfahrzeug in drucklosem Zustand.

Das erfindungsgemäße Hybrid-Antriebssystem A in Figur 1 ist beispielsweise in einem Arbeitsfahrzeug F mit einer hier nicht angetriebenen Vorderachse 1 und einer über ein Differential 3 und einen mechanischen Antriebsstrang 4 (Kardanwelle) angetriebenen Hinterachse 2 ausgestattet, und weist als Primärantriebsaggregat einen Verbrennungsmotor 5 (Dieselmotor oder Benzinmotor) und ein Getriebe 8 (Schaltgetriebe, automatisches Getriebe oder stufenlos variables Getriebe) auf.

Das Arbeitsfahrzeug F ist beispielsweise ein Kranken- oder Behinderten-Transportfahrzeug, zum Beispiel ein Sprinter, ein Straßenpflegefahrzeug, ein kleiner oder großer Schulbus, ein Müllfahrzeug, ein Radlader oder dergleichen, und verfügt über bordeigene oder angebaute, hydraulisch betreibbare Einrichtungen E, die an einen hydraulischen Arbeitsmodul M angeschlossen oder anschließbar sind.

Das Hybrid-Antriebssystem A umfasst auch einen parallelen hydraulischen Hybridmodul H, beispielsweise bestehend aus zwei Blöcken 6, 7.

Im mechanischen Antriebsstrang 4 kann beispielsweise zwischen dem Getriebe 8 und einem Nebengetriebe 9 eine Freilaufkupplung K enthalten sein. Das Nebengetriebe 9 (z.B. untersetzend oder übersetzend) verbindet die Hinterachse 2 über das Differential 3 mit einem im Block 6 enthaltenen Hydraulikaggregat 11, das als Pumpe und als Motor betreibbar ist und mit dem Nebengetriebe 9 (oder dem Antriebsstrang 4) über eine schaltbare Kupplung 10 verbunden ist. Die Kupplung 10 ist vorzugsweise eine Haldex-Kupplung, die hydraulisch aus einem Steuerdruckkreis 26 über ein 3/2-Proportionalmagnet-Druckregelventil 27 betätigbar ist, um entweder beim Bremsen das Hydraulikaggregat 11 als Pumpe anzutreiben, oder die Hinterachse 2 mit dem als Motor arbeitenden Hydraulikaggregat 11 anzutreiben, oder den Hybridmodul H vollständig vom mechanischen Antriebsstrang 4 zu trennen.

Das Hydraulikaggregat 11 ist eine Verstellpumpe / ein Verstellmotor mit einem Regler 12, der sicherstellt, dass das Hydraulikaggregat 11 jeweils mit maximalem Schluckvolumen anfährt.

Der Block 6 mit dem Hydraulikaggregat 11 ist in dem Block 7 über zwei Arbeitsleitungen 13, 14 und Logikelementen 15, 16 und auch über Leitungsverzweigungen 18, 19, die mit Rückschlagventilen abgesichert sind und den Steuerdruckkreis 26 speisen mit zwei Druckspeichern HS2, HS1 (hydraulischen Gasdruckspeichern) verbunden. Steuerkammern der Logikelemente 15, 16 sind über einen 4/3-Wege-Proportionalschieber 17 mit dem Steuerdruckkreis 26 und einem Hydraulikreservoir 22 verbindbar, das an einen Rücklaufkreis 21 angeschlossen ist, mit welchem auch die Zweigleitungen 18, 19 über Druckbegrenzungsventile 20 mit Nachsaugfunktion verbunden sind. Im Block 7 ist ein 3/2-Wege-Umschaltventil 23 enthalten, das durch eine Feder 24 in der gezeigten Schaltstellung gehalten wird, in welcher die Zweigleitung 18 mit einer Leitung 41 verbunden ist, die bei der gezeigten Ausführungsform über ein 2/2-Proportional-Magnetventil 29 zu einer Leitung 28 zu einem Anschluss 31 des Arbeitsmoduls M führt. Das Umschaltventil 23 wird über ein Wechselventil 25 aus der jeweils den höheren Druck führenden Zweigleitung 18 oder 19 gegen die Federkraft in die andere Schaltstellung umgeschaltet, in der die Leitung 41 mit der Zweigleitung 19 verbunden wird.

Der hydraulische Arbeitsmodul M weist neben dem Anschluss 31 der Leitung 28 beispielsweise mehrere Anschlüsse 30 zum Anschließen der hydraulisch betreibbaren Einrichtungen E des Arbeitsfahrzeugs F auf, so wie einen weiteren Anschluss 32 und einen Anschluss 33.

Der Verbrennungsmotor 5 treibt über einen Nebenabtrieb 34 eine Verstellpumpe 35, die über eine Leitung 36 ein 3/2-Wege-Prioritätsventil 37 versorgt, an das eine hydraulische Lenkung L einerseits und der Anschluss 33 des Arbeitsmoduls M andererseits angeschlossen sind, wobei das Prioritätsventil 37 der hydraulischen Lenkung L Vorrang gibt.

Einem Kühler zumindest des Verbrennungsmotors 5 ist ein Lüfter 40 zugeordnet, der einen hydraulischen Antriebsmotor 39 aufweist, der aus einer Leitung 38 gespeist wird. Die Leitung 38 ist entweder direkt (wie gestrichelt bei 38' angedeutet) mit der vom Prioritätsventil 37 zum Anschluss 33 des Arbeitsmoduls M verlaufenden Leitung verbunden, oder indirekt mit dem Anschluss 32 im Arbeitsmodul M. Als Alternativlösung ist ferner bei 28' angedeutet, dass auch die hydraulische Lenkung L aus der Leitung 28 vom Hybridmodul H versorgt werden könnte. Ferner ist darauf hinzuweisen, dass das 2/2-Proportional-Magnetventil 29 zwischen den Leitung 28 und 41 eine Option ist und gegebenenfalls weggelassen werden könnte. Das Hydraulikreservoir 22 ist gemeinsam für den Hybridmodul H, den Arbeitsmodul M und die Verstellpumpe 35 vorgesehen, die sämtliche an den Rücklaufkreis 21 angeschlossen sind.

### Funktion:

Im normalen Fahrbetrieb wird das Arbeitsfahrzeug F vom Verbrennungsmotor 5 über den mechanischen Antriebsstrang 4 angetrieben, wobei die Kupplung 10 ausgerückt ist. Die Verstellpumpe 35 versorgt die hydraulische Lenkung L wie auch den Arbeitsmodul M und über diesen den hydraulischen Lüfterantriebsmotor 39. Falls erforderlich, können während dieser Phase die Einrichtungen E am Arbeitsmodul M zumindest über das Prioritätsventil 37 von der Verstellpumpe 35 versorgt und betrieben werden. Unter der Voraussetzung, dass in dieser Betriebsphase zumindest einer der Druckspeicher HS1, HS2 des Hybridmoduls H ausreichend geladen ist, kann der Arbeitsmodul M nach Umschalten des 2/2-Proportionalmagnetventils 29 in die Durchgangsstellung am Anschluss 31 aus dem Hybridmodul H versorgt werden, und gegebenenfalls auch der Lüfterantriebsmotor 39 und/oder die hydraulische Lenkung L, so dass dann die Verstellpumpe 35 im Stand-by-Modus verlustarm laufen kann. Wird eine der Einrichtungen E am Arbeitsmodul M so betrieben, dass sie beispielsweise unter Last gebremst gesenkt wird, kann die dadurch entstehende hydraulische Energie über die Leitung 28 und das aufgesteuerte Ventil 29 in den Hybridmodul H eingespeist und dort gespeichert werden.

Bei einer Verzögerung des Arbeitsfahrzeugs oder beim Abbremsen wird die Kupplung 10 eingerückt, so dass das Hydraulikaggregat 11 als Pumpe von der Bremsleistung angetrieben wird, das Arbeitsfahrzeug F bremst, und beispielsweise über die Leitung 14 den Druckspeicher HS2 bis auf einen Maximaldruck des Druckbegrenzungsventils 20 lädt, während das Hydraulikaggregat 11 über das andere Druckbegrenzungsventil 20 und dessen Nachsaugfunktion Hydraulikmedium aus dem Hydraulikreservoir 22 nachsaugt. Werden in der Bremsphase oder im Stillstand des Arbeitsfahrzeuges F Einrichtungen E betrieben, kann das Arbeitsmodul M aus dem Hybridmodul H gespeist werden. Bereits in der Bremsphase kann der Verbrennungsmotor 5 über die Start/Stopp-Automatik stillgesetzt werden, da dann der Arbeitsmodul M wie auch die hydraulische Lenkung und gegebenenfalls der Lüfterantriebsmotor 39 aus dem Hybridmodul H versorgt werden.

Soll das Arbeitsfahrzeug A wieder losfahren und beschleunigen, wird über den 4/3-Wege-Proportionalschieber 17 die Steuerkammer des entsprechenden Logikelementes 15, 16 entlastet, so dass das Hydraulikaggregat 11 bei eingerückter Kupplung 10 aus einem Druckspeicher HS1, HS2 als Motor betrieben wird und über das Nebengetriebe 9 die Hinterachse 2 antreibt. Bis zu einer bestimmten Fahrgeschwindigkeit oder bis zu einer vorbestimmten Beschleunigung kann das Arbeitsfahrzeug ausschließlich mit dem Hybridmodul H gefahren werden, wobei der Verbrennungsmotor 5 nach wie vor stillgesetzt ist.

Soll das Arbeitsfahrzeug aus dem Stillstand rückwärts gefahren werden, so wird dies über den 4/3-Wege-Proportionalschieber 17 gesteuert, der das dann als Motor arbeitende Hydraulikaggregat 11 aus dem zuständigen Druckspeicher HS1, HS2 mit Druck und einem Volumenstrom versorgt. Parallel kann weiterhin der Arbeitsmodul M aus dem Hybridmodul H versorgt werden, zumindest bis zum Erreichen einer vorbestimmten unteren Druckgrenze in dem jeweiligen Druckspeicher HS1, HS2, ehe dann gegebenenfalls das 2/2-Proportionalmagnet-Ventil 29 umgeschaltet wird. Gleichfalls kann beispielsweise aus dem Absenken einer Last an einer der Einrichtungen E gewonnene hydraulische Energie über die Leitung 28 in den Hybridmodul H eingespeist und gespeichert werden, die später wieder im Arbeitsmodul M und/oder zum Antreiben der Hinterachse 2 nutzbar ist.

Wird die vorbestimmte Fahrgeschwindigkeit und/oder Beschleunigung überschritten, dann wird der Verbrennungsmotor 5 in Betrieb genommen und zugeschaltet, wobei jedoch zunächst der Hybridmodul H weiterhin assistieren kann und, zweckmäßig, erst dann durch Ausrücken der Kupplung 10 vom mechanischen Antriebsstrang 4 getrennt wird, wenn der Verbrennungsmotor 5 mit optimalem Wirkungsgrand läuft, der Hybridmodul H keinen spürbaren Beitrag mehr zu leisten vermag und/oder die Druckspeicher HS1, HS2 ausreichend aufgeladen sind.

Das Zusammenspiel der einzelnen Komponenten im Hybridantriebssystem A kann durch einen nicht gezeigten Controller und ein Verbrennungsmotor-Management überwacht und gesteuert werden, unterstützt durch Informationen beispielsweise zu an bestimmten Punkten im System herrschenden Drücken, Drehzahlen des Antriebsstrangs 4, des Motors, des Nebengetriebes 9 und dergleichen (z.B. Drucksensoren beispielsweise an den Zweigleitungen 18, 19).

Die Eingliederung des parallelen hydraulischen Hybridmoduls H in ein bestehendes konventionelles Antriebssystems eines Arbeitsfahrzeugs ist kostengünstig entweder als Erstausrüstung oder zur Umrüstung möglich, ohne das konventionelle Grundprinzip nachhaltig ändern zu müssen. Die verbesserte Energiebilanz des Hybrid-Antriebssystems gemäß der Erfindung resultiert in mehreren Vorteilen und ermöglicht unterschiedliche Betriebsarten des Arbeitsfahrzeugs:
Das Arbeitsfahrzeug kann ohne Beiziehen des Hybridmoduls mit dem Verbrennungsmotor gefahren werden, wobei die an den Arbeitsmodul M angeschlossenen Einrichtungen E wie gewünscht nutzbar sind. Alternativ kann der Hybridmodul zumindest zum Anfahren herangezogen werden, um Treibstoff zu sparen und bessere Fahrleistungen zu erzielen. Alternativ kann das Arbeitsfahrzeug auch nur mit Hilfe des Hybridmoduls gefahren werden, oder zumindest im Parallelbetrieb gefahren. Beim Bremsen ist stets ein Rekuperationsbetrieb mit diesem hydrostatisch regenerativen Bremssystem möglich, wobei Speicherenergie aus dem Hybridmodul für Zusatzfunktionen wie beispielsweise das Kühlgebläse des Verbrennungsmotors und gegebenenfalls auch die hydraulische Lenkung einsetzbar ist, und vor allem für die Arbeitshydraulik am Arbeitsmodul M.

Das System ermöglicht eine Kraftstoffeinsparung bis zu etwa 30%, wobei zweckmäßig der Verbrennungsmotor mit der Start/Stop-Automatik und so betreibbar ist, dass er zumindest beim Anfahren über den Hybridmodul oder beim Fahren nur mit dem Hybridmodul und zweckmäßig stets beim Bremsen stillgesetzt wird. Insgesamt ergibt sich auch eine nachhaltige Reduzierung des Schadstoffausstoßes des Verbrennungsmotors. Der Verschleiß der Bremsen lässt sich um bis zu 60% verringern, wenn das Hydraulikaggregat 11 zum Bremsen genutzt wird. Der Verbrennungsmotor wird in an sich kritischen Stop and Go Phasen entlastet. Die Unterhaltskosten des Arbeitsfahrzeuges gestalten sich wesentlich wirtschaftlicher. Die gespeicherte Energie lässt sich rasch genug abgeben, ohne das Fahrgefühl zu beeinträchtigen oder die Benutzung der hydraulisch betreibbaren Einrichtungen zu stören. Das Arbeitsfahrzeug lässt sich praktisch verschleißfrei reversieren, da hier weder die Bremsen noch der Verbrennungsmotor benötigt werden. Schon bei niedriger Motordrehzahl lässt sich im Parallelbetrieb hohe Zugkraft erzeugen. Insgesamt wird die Lebensdauer vieler wichtigen und sicherheitsrelevanten Komponenten des Arbeitsfahrzeugs verlängert.

## Patentansprüche

1. Hybrid-Antriebssystem (A) für ein bordeigene oder angebaute, hydraulisch betreibbare Einrichtungen (E) aufweisendes Arbeitsfahrzeug (F), wobei das Hybrid-Antriebssystem (A) einen mechanischen Antriebsstrang (4) mit einem Getriebe (8) zwischen einem Verbrennungsmotor (5) und wenigstens einer Antriebsachse (2) sowie einen parallelen hydraulischen Hybridmodul (H) umfasst, der ein als Motor oder Pumpe betreibbares, über eine wahlweise ein- und ausrückbare Kupplung (10) und ein Nebengetriebe (9) mit dem mechanischen Antriebsstrang (4) verbundenes Hydraulikaggregat (11, 12) sowie wenigstens einen Druckspeicher (HS1, HS2) aufweist, wobei für hydraulisch betreibbare Einrichtungen (E) wenigstens ein hydraulischer Arbeitsmodul (M) vorgesehen und druck- und mengenübertragend mit dem Hybridmodul (H) verbunden oder verbindbar ist, **dadurch gekennzeichnet, dass** aus dem Betrieb wenigstens einer der Einrichtungen (E) gewonnene hydraulische Energie über den hydraulischen Arbeitsmodul (M) in den Hybridmodul (H) einspeisbar ist, und dass mit dem Verbrennungsmotor (5) eine hydraulische Verstellpumpe (35) gekuppelt ist, an die zumindest der hydraulische Arbeitsmodul (M) und eine hydraulische Lenkung (L) angeschlossen sind.

2. Hybrid-Antriebssystem nach Anspruch 1, **dadurch gekennzeichnet, dass** die hydraulische Lenkung (L) und der hydraulische Arbeitsmodul (M) über ein Prioritätsventil (37) mit Priorität für die hydraulische Lenkung (L) an die Verstellpumpe (35) angeschlossen sind.

3. Hybrid-Antriebssystem nach Anspruch 1, **dadurch gekennzeichnet, dass** der hydraulische Arbeitsmodul (M) im Hybridmodul (H) wahlweise mit einer von zwei vom Hydraulikaggregat (11) zu je einem von zwei Druckspeichern (HS1, HS2) führenden Speiseleitungen (18, 19) verbindbar ist.

4. Hybrid-Antriebssystem nach Anspruch 1, **dadurch gekennzeichnet, dass** die hydraulische Lenkung (L) und/oder ein hydraulischer Kühlgebläse-Antrieb (39), vorzugsweise über den hydraulischen Arbeitsmodul (M), mit dem Hybridmodul (H) verbunden oder verbindbar ist bzw. sind.

5. Hybrid-Antriebssystem nach wenigstens einem der Ansprüche 1 bis 4, **dadurch gekennzeichnet, dass** der Verbrennungsmotor eine Start/Stop-Automatik aufweist und bei aktiviertem Hybridmodul (H) stillsetzbar ist.

6. Hybrid-Antriebssystem nach Anspruch 1, **dadurch gekennzeichnet, dass** das hydraulische Arbeitsmodul (M) über ein 2/2-Magnetventil (29), vorzugsweise ein Proportional-Magnetventil, an den Hybridmodul (H) anschließbar ist.

7. Hybrid-Antriebssystem nach Anspruch 1, **dadurch gekennzeichnet, dass** die Kupplung (10) eine hydraulisch schaltbare Haldex-Kupplung ist.

8. Hybrid-Antriebssystem nach Anspruch 7, **dadurch gekennzeichnet, dass** die Haldex-Kupplung (10) über ein 3/2-Proportional-Druckregelventil aus einem Steuerdruckkreis (26) betätigbar ist, der, vorzugsweise, aus dem Hybridmodul (H) gespeist ist.

9. Hybrid-Antriebssystem nach Anspruch 3, **dadurch gekennzeichnet, dass** im Hybridmodul (H) eine zum hydraulischen Arbeitsmodul (M) führende Leitung (41) an ein gegen Vorsteuerdruck federbelastetes 3/2-Umschaltventil (23), zu den Speiseleitungen (18, 19) angeschlossen ist.

10. Hybrid-Antriebssystem nach wenigstens einem der vorhergehenden Ansprüche, **dadurch gekennzeichnet, dass** für den Hybridmodul (H), den hydraulischen Arbeitsmodul (M) und die Verstellpumpe (35) ein gemeinsames Hydraulikreservoir (22) vorgesehen ist.

## Claims

1. A hybrid drive system (A) for a working vehicle (F) including onboard or attached hydraulically drivable devices (E), wherein the hybrid drive system (A) includes a mechanical drive train (4) with a gear unit (8) between a combustion engine (5) and at least one drive shaft (2) and a parallel hydraulic hybrid module (H), which includes a hydraulic unit (11, 12), which is operable as a motor or a pump and is connected to the mechanical drive train (4) by means of a selectively engageable and disengageable clutch, (10) and an auxiliary gear unit (9), and at least one pressure reservoir (HS1, HS2), wherein at least one hydraulic working module (M) is provided for hydraulically operable devices (E) and is connected or connectable in a pressure and in a volume transmitting manner to the hybrid module (H), **characterised in that** hydraulic energy obtained from the operation of at least one of the devices (E) is feedable via the hydraulic working module (M) into the hybrid module (H) and that coupled to the combustion engine (5) there is a hydraulic variable displacement pump (35), connected to which are at least the hydraulic working module (M) and a hydraulic steering mechanism (L).

2. A hybrid drive system as claimed in Claim 1, **characterised in that** the hydraulic steering mechanism (L) and the hydraulic working module (M) are connected to the variable displacement pump (35) via a priority valve (37) with priority for the hydraulic steering mechanism (L).

3. A hybrid drive system as claimed in Claim 1, **characterised in that** the hydraulic working module (M) in the hybrid module (H) is selectively connectable to one of two feed lines (18, 19) leading from the hydraulic unit (11) to a respective one of two pressure reservoirs (HS1, HS2).

4. A hybrid drive system as claimed in Claim 1, **characterised in that** the hydraulic steering mechanism (L) and/or a hydraulic cooling fan drive (39) is or are connected or connectable to the hybrid module (H), preferably via the hydraulic working module (M).

5. A hybrid drive system as claimed in at least one of Claims 1 to 4, **characterised in that** the combustion engine includes an automatic start/stop system and may be shut down when the hybrid module (H) is activated.

6. A hybrid drive system as claimed in Claim 1, **characterised in that** the hydraulic working module (M) is connectable to the hybrid module (H) via a 2/2 magnetic valve (29), preferably a proportional magnetic valve.

7. A hybrid drive system as claimed in Claim 1, **characterised in that** the clutch (10) is a hydraulically switchable Haldex clutch.

8. A hybrid drive system as claimed in Claim 7, **characterised in that** the Haldex clutch (10) is actuable by means of a 3/2 proportional pressure control valve from a pressure control circuit (26), which is preferably supplied from the hybrid module (H).

9. A hybrid drive system as claimed in Claim 3, **characterised in that** in the hybrid module (H) a line (41) leading to the hydraulic working module (M) is connected to a 3/2 switchover valve (23), which is acted on by a spring against pilot pressure, to the feedlines (18, 19).

10. A hybrid drive system as claimed in at least one of the preceding claims, **characterised in that** a common hydraulic reservoir (22) is provided for the hybrid module (H), the hydraulic working module (M) and the variable displacement pump (35).

## Revendications

1. Système d'entraînement hybride (A) pour un véhicule de travail (F) présentant des dispositifs (E) à commande hydraulique embarqués ou rapportés, le système d'entraînement hybride (A) comprenant une chaîne cinématique (4) mécanique avec une boîte de vitesse (8) entre un moteur à combustion (5) et au moins un essieu moteur (2), ainsi qu'un module hybride (H) hydraulique parallèle qui présente un groupe hydraulique (11, 12) pouvant fonctionner en tant que moteur ou pompe, raccordé à la chaîne cinématique (4) mécanique par le biais d'un coupleur au choix embrayable et débrayable ainsi que par le biais d'une boîte de vitesse annexe (8), ainsi qu'au moins un accumulateur de pression (HS1, HS2), au moins un module de travail (M) hydraulique étant prévu pour des dispositifs (E) à commande hydraulique et étant raccordé ou pouvant être raccordé au module hybride (H) en transmettant pression et débit, **caractérisé en ce que** de l'énergie hydraulique obtenue à partir du fonctionnement d'au moins un des dispositifs (E) peut être introduite dans le module hybride (H) par le biais du module de travail (M) hydraulique, et **en ce qu'**une pompe à cylindrée variable (35) hydraulique est couplée avec le moteur à combustion (5), à laquelle au moins le module de travail (M) hydraulique et une direction (L) hydraulique sont raccordés.

2. Système d'entraînement hybride selon la revendication 1, **caractérisé en ce que** la direction (L) hydraulique et le module de travail (M) hydraulique sont raccordés à la pompe à cylindrée variable (35) par le biais d'une valve de priorité (37) avec priorité à la direction (L) hydraulique.

3. Système d'entraînement hybride selon la revendication 1, **caractérisé en ce que** le module de travail (M) hydraulique dans le module hybride (H) peut être raccordé au choix à l'une de deux conduites d'alimentation (18, 19) conduisant du groupe hydraulique (11) à respectivement l'un de deux accumulateurs de pression (HS1, HS2).

4. Système d'entraînement hybride selon la revendication 1, **caractérisé en ce que** la direction (L) hydraulique et/ou un entraînement de ventilateur de refroidissement (39) hydraulique est/sont raccordé(e)s ou peuvent être raccordé(e)s au module hybride (H) de préférence par le biais du module de travail (M) hydraulique.

5. Système d'entraînement hybride selon au moins l'une des revendications 1 à 4, **caractérisé en ce que** le moteur à combustion présente un système automatique Start/Stop et peut être arrêté quand le module hybride (H) est activé.

6. Système d'entraînement hybride selon la revendication 1, **caractérisé en ce que** le module de travail (M) hydraulique peut être raccordé au module hybride (H) par le biais d'une électrovanne 2/2 voies (29), de préférence une électrovanne proportionnelle.

7. Système d'entraînement hybride selon la revendication 1, **caractérisé en ce que** le coupleur (10) est un coupleur Haldex à commande hydraulique.

8. Système d'entraînement hybride selon la revendication 7, **caractérisé en ce que** le coupleur Haldex (10) peut être actionné par le biais d'une soupape de régulation de pression proportionnelle 3/2 voies à partir d'un circuit de pression de commande (26) qui est de préférence alimenté à partir du module hybride (H).

9. Système d'entraînement hybride selon la revendication 3, **caractérisé en ce que**, dans le module hybride (H), une conduite (41) conduisant au module de travail (M) hydraulique est raccordée à une vanne de commutation 3/2 voies (23) chargée par ressort contre la pression pilote vers les conduites d'alimentation (18, 19).

10. Système d'entraînement hybride selon au moins l'une des revendications précédentes, **caractérisé en ce qu'**un réservoir hydraulique (22) commun est prévu pour le module hybride (H), le module de travail (M) hydraulique et la pompe à cylindrée variable (35).
